# EUROPÄISCHE PATENTSCHRIFT

(11) **EP 1 450 316 B1**
(45) Veröffentlichungstag und Bekanntmachung des Hinweises auf die Patenterteilung: **27.08.2014**
(21) Anmeldenummer: 03100436.9
(22) Anmeldetag: 21.02.2003
(51) Int. Cl.: G07F 7/08, G06Q 20/10, G06Q 20/28, G06Q 20/32, G06Q 20/36

(54) **Verfahren und Modul zur Verwaltung eines Wertkontos**
Method and system for administration of a financial account
Méthode et système pour l'administration d'un compte

(43) Veröffentlichungstag der Anmeldung: 25.08.2004
(73) Patentinhaber: Swisscom AG, 3050 Bern (CH)
(72) Erfinder: Cantini, Renato, 1782, Belfaux (CH); Busch Lauper, Karin, 3014, Bern (CH)
(74) Vertreter: P&TS SA (AG, Ltd.)

(56) Entgegenhaltungen:
- EP-A- 0 848 360
- WO-A-00/31691
- WO-A1-00/42581
- GB-A- 2 372 867
- US-A1- 2002 161 702
- US-A1- 2003 026 404

## Beschreibung

### Technisches Gebiet

Die vorliegende Erfindung betrifft ein Verfahren und ein Nachlademodul zur Verwaltung eines Wertkontos, das an ein tragbares persönliches Identifizierungsmodul zur Identifizierung eines Mobilgeräts in einem Mobilfunknetz gebunden ist, entsprechend den unabhängigen Ansprüchen.

### Stand der Technik

Gemäss dem bisherigen Stand der Technik werden Zahlungstransaktionen zwischen einem Kunden (Benutzer, zum Beispiel einem Mobilteilnehmer) und einem Anbieter (beispielsweise einem Händler) oft mit einer elektronischen Zahlungskarte ausgeführt. Debit- und Kreditkarten werden zum Beispiel an Kassen in Geschäften, bei Tankstellen usw. verwendet. Die Karte umfasst meistens Speichermittel (zum Beispiel einen Magnetstreifen und/oder einen Chip) in welchen unter anderem die Identifizierung des Kunden gespeichert ist. Um eine Transaktion zu tätigen (zum Beispiel um in einem Geschäft einen Artikel zu bezahlen) muss der Benutzer seine Karte beim Händler in einen geeigneten Kartenleser einschieben. Das Terminal liest dann die Identifizierung des Geldkontos (zum Beispiel die PAN, Primary Account Number) in der Karte, ermittelt und zeigt den zu bezahlenden Betrag an, prüft gegebenenfalls die Solvenz des Benutzers und fordert vom Benutzer, dass er die Transaktion mit einer Bestätigungstaste auf dem Händler-Terminal bestätigt. Wenn der Kunde solvent ist und seine Bestätigung eingegeben hat, werden die Geldkontoinhaber-Identifizierung, der zu bezahlende Betrag und evtl. auch eine Terminal-Identifizierung an einen durch ein Telekommunikationsnetz mit dem Terminal verbundenen Finanzserver übermittelt. Entsprechend wird das Konto des Benutzers bei diesem Zahlungsdienstanbieterserver sofort oder später belastet.

Anbieter verfügen immer öfter über "virtuelle Terminals" (zum Beispiel Software-Komponenten), die für Zahlungstransaktionen mit einer Geldkarte miteinander kooperieren. In der nachfolgenden Beschreibung wird deshalb von Anbieter-Zahlungsmodul gesprochen, wobei das Modul entweder ein physisches Terminal sein kann oder eine Software-Anwendung.

Man unterscheidet bei kartenbasierten Zahlungssystemen zwischen Wertkarten (oder elektronisches Geld), Kreditkarten und Debitkarten. Bei Wertkarten weist die Zahlungskarte meist einen Speicherbereich auf, in welchen (in der Regel zuvor) ein Geldbetrag geladen wurde (Prepaid). Der Geldbetrag kann aus Sicherheitsgründen oft auch in einem Fernserver gespeichert werden; in diesem Fall kann die Wertkarte nur eine Identifizierung des entsprechenden Kontos in diesem Server umfassen. Bei Kreditkarten ist die Karte an ein Konto des Benutzers bei einem Finanzinstitut gebunden, wobei dieses Konto erst nach der Transaktion belastet wird (pay later). Bei Debitkarten hingegen muss das gebundene Konto beim Finanzinstitut im Voraus geladen werden und wird während oder unmittelbar nach der Transaktion belastet (pay now).

Nachteilig in diesen Verfahren ist die Notwendigkeit, die Karte des Benutzers in ein fremdes Gerät einschieben zu müssen. Die Benutzer haben normalerweise ihre Karte nicht zur Hand, sondern zum Beispiel im Portemonnaie; eine sehr schnelle Transaktion ist also nicht möglich.

Diese Karten enthalten eine Geldkontoinhaber-Identifizierung, die indes nur erlaubt, die Benutzer beim Zahlungsdienstanbieter identifizieren zu lassen. Eine Karte kann also normalerweise nur dann für eine finanzielle Transaktion benutzt werden, wenn der Benutzer und der Anbieter beim gleichen Zahlungsdienstanbieter affiliiert sind. Dagegen ist der Gebrauch der Karte nicht für andere Arten von Transaktionen (zum Beispiel für nicht-finanzielle Transaktionen) vorgesehen. Für den Benutzer ist es also unumgänglich, stets eine grosse Anzahl von Karten für jegliche Arten von finanziellen oder nicht-finanziellen Transaktionen zu besitzen, zum Beispiel mehrere Wert-, Debit- oder Kreditkarten, die von verschiedenen Finanzinstituten oder Ladenketten verwaltet werden, oder Abonnementskarten oder Zugangskarten für geschützte Zonen. Diese Karten sind meistens durch verschiedene Pin-Codes geschützt, die sich der Benutzer mühsam einprägen muss. Ausserdem müssen sowohl Benutzer als auch Händler verschiedene Konten verwalten, das heisst für jedes Konto die allgemeinen Geschäftsbedingungen studieren, Prepaid und Wertkonten im Voraus nachladen, Kontoauszüge prüfen, usw.

Um diese Probleme zu vermeiden, wurde unter anderem in der Patentanmeldung WO-A1-98/37524 vorgeschlagen, die SIM-Karte(Subscriber Identity Module) zur Identifizierung des Benutzers in einem Mobilfunksystem als elektronische Zahlungskarte zu verwenden. Zur Übertragung der Transaktionsdaten wird eine kontaktlose Verbindung (zum Beispiel eine infrarote Verbindung) zwischen dem Benutzermobilgerät und dem Anbieterterminal aufgebaut. Dadurch erübrigt sich für den Benutzer die Notwendigkeit, eine elektronische Karte aus dem Portemonnaie zu ziehen und in ein fremdes Gerät einzuschieben.

Es sind beim bisherigen Stand der Technik auch Zahlungsverfahren bekannt, bei welchen Transaktionsdaten zwischen dem Benutzermobilgerät und einem Händlerterminal nicht direkt, sondern über eine Zahlungsplattform im Mobilfunknetz übertragen werden. Dabei werden Belege oder eine Referenz zur Transaktion oft über SMS (Short-Message Service) oder USSD (Unstructured Supplementary Service Data) übertragen. Diese Lösungen haben den Vorteil, dass keine umständliche und sicherheitskritische direkte Verbindung zwischen Mobilgerät und Terminal aufgebaut werden muss. Ausserdem erlauben Sie auch Transaktionen zwischen Benutzer und Anbieter, die sich nicht in unmittelbarer Nähe voneinander befinden.

Es sind beim bisherigen Stand der Technik auch Zahlungsverfahren bekannt, bei welchen eine einzige Zahlungskarte mit mehreren Geldkonten verbunden ist. Dadurch erübrigt sich für den Benutzer die Notwendigkeit, mehrere Zahlungskarten bei sich zu haben.

Wird eine solche an mehrere Konten gebundene Karte mit einem (oft ebenfalls an mehrere Konten gebundenen) Terminal verwendet, muss der Benutzer bestimmen, welches Geldkonto für die Transaktion verwendet werden muss. Ist beispielsweise eine Karte an ein Prepaid-Wertkonto und an mehrere Kredit- und/oder Debit-Kartenkonten gebunden, kann der Benutzer meist in einem Menu im Händlerterminal entscheiden, welches Geldkonto belastet werden soll. Dabei kann er verschiedene Parameter berücksichtigen, beispielsweise die Bonität jedes Kontos, die Transaktionskosten, die Sicherheit, den Komfort usw.

Bei Geldkarten, die an mehrere Konten gebunden sind, muss der Inhaber für jedes Konto stets den verfügbaren Saldo beziehungsweise die Kreditlimite prüfen und Wert- beziehungsweise Debitkonten bei Bedarf selbst nachladen. Verschiedene Wertkonten verwenden verschiedene Nachladeverfahren, in Abhängigkeit vom Zahlungsdienstanbieter. Bei manchen Wertkonten und Debitkonten kann der aktuelle verfügbare Saldo leicht geprüft werden (beispielsweise auf der Anzeige des Mobilgeräts) bei anderen erhält der Inhaber nur periodische Kontoauszüge. Die Kontrolle des Saldos und das Nachladen der Wert- und Debitkonten sind daher für Karteninhaber eher umständlich. Aus Komfortgründen laden daher viele Benutzer unnötig hohe Geldbeträge im Voraus auf viele Wertkonten, um sicherzustellen, dass sie jederzeit über einen für geplante und unerwartete Bedürfnisse ausreichenden Geldbetrag verfügen. Dadurch wird jedoch das Risiko bei Verlust oder Diebstahl der Karte erheblich erhöht. Ausserdem werden bei den allermeisten Wertkonten die die sich auf dem Konto befindenden Geldbeträge nicht verzinst. Viele Wertkonten können ausserdem nur zugunsten von Drittparteien belastet werden; es ist meistens unmöglich, einen Restbetrag von einem Wertkonto zu einem anderen Debitkonto des selben Inhabers zu überweisen.

GB-A-2 372 867 betrifft ein Verfahren, um Prepaid-Karten nachzuladen und andere Zahlungstransaktionsverfahren auszuführen. Alle Ausführungsformen beschreiben jedoch eine Benachrichtigung und Zustimmung des Benutzers, bevor die Transaktion durchgeführt wird.

EP-A1-0 848 360 wird die Verwendung einer SIM-Karte für Zahlungstransaktionen beschrieben. Die Transaktion kann von Radiosendern in der Nähe, beispielsweise in einer Kasse, initiiert werden. Es ist jedoch nachteilig kein vollautomatisches Belastungsverfahren beschrieben.

WO-A1-00/31691 offenbart ein Verfahren zum Erfassen, Verrechnungen und Sperren von Dienstleistungen, die einem Mobilteilnehmer von einer Dienstvorrichtung beispielsweise ein Bus, ein Parkplatzkontrollsystem, usw. angeboten werden. Dies geschieht anhand eines Sperrtokens, der auf der SIM-Karte abgespeichert wird. Es ist jedoch eine direkte Schnittstelle zwischen dem Mobilteilnehmerterminal und der Dienstvorrichtung erforderlich.

US2003/0026404 offenbart ein Verfahren zur automatischen Aufladung von Wertkonten in Abhängigkeit von externen Ereignissen.

### Darstellung der Erfindung

Es ist eine Aufgabe der vorliegenden Erfindung, ein neues Verfahren und eine neue Vorrichtung vorzuschlagen, die erlauben, die oben erwähnten Nachteile zu verhindern.

Eine andere Aufgabe ist es, ein Verfahren und eine Vorrichtung vorzuschlagen, mit welchen Wert- und Debitkonten proaktiv nachgeladen werden.

Eine andere Aufgabe ist es, ein Verfahren und eine Vorrichtung vorzuschlagen, die zusätzliche Dienste und nützliche Funktionen erlauben.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Verfahren zur Verwaltung eines Wertkonto erreicht, das an ein tragbares persönliches Identifizierungsmodul, welches ein Mobilgeräts in einem Mobilfunknetz identifiziert, gebunden ist, in welchem Geldbeträge automatisch durch ein Nachlademdul in Abhängigkeit von externen Ereignissen in das oder aus dem benannten Wertkonto nachgeladen oder belastet werden.

Dies hat den Vorteil, dass an eine Karte gebundene Wertkontos automatisch, proaktiv und ohne Intervention des Wertkontoinhabers, nachgeladen werden.

Dies hat für den Wertkontoinhaber ausserdem den Vorteil, dass auf jedem Wertkonto stets ein passender Geldbetrag geladen ist, ohne dass er sich selbst um den Nachladevorgang kümmern muss.

In einer bevorzugten Ausführungsform kann der Wertkontoinhaber selber die Ereignisse und Kriterien festlegen, die eine Nachladung oder Belastung eines Kontos verursachen können. Dies hat den Vorteil, dass der Wertkontoinhaber somit selbst den für ihn passenden Kompromiss zwischen Komfort und Sicherheit auswählen kann.

In einer bevorzugten Variante werden mindestens gewisse Geldkonten von einer Plattform in der Infrastruktur des Mobilfunknetzes betrieben. Transaktionsdaten für Transaktionen mit mehreren Geldkonten, die eventuell von mehreren Zahlungsdienstanbietern und/oder mehreren Finanzinstituts angeboten werden, werden somit durch eine gemeinsame Plattform übertragen und in dieser Zahlungsplattform bewertet. Dies hat den Vorteil, dass ein allfälliger Betrug mit grösster Sicherheit aufgedeckt werden kann, da das Verhalten der Benutzer mit mehreren unabhängigen Geldkonten überwacht werden kann, und da dieses Verhalten mit Parametern, die nur in der Infrastruktur des Mobilfunknetzes vorhanden sind, korreliert werden kann. Diese Plattform hat ausserdem den Vorteil, dass konsolidierte Rechnungen und Kontoauszüge, welche Transaktionsdaten mit mehreren Geldkonten umfassen, für den Benutzer und/oder zu statistischen Zwecken verwendet werden können.

In einer bevorzugten Variante können Geldbeträge zwischen verschiedenen Geldkonten eines Benutzers, oder sogar zwischen verschiedenen Benutzern, vorzugsweise über die gemeinsame Plattform übertragen werden. Insbesondere wenn ein Anbieter gleichzeitig ein Mobilteilnehmer ist, können somit Peer-to-Peer Geldtransaktionen über die vom Netzwerkanbieter betriebene Zahlungsplattform durchgeführt werden. Dies erlaubt zum Beispiel, ein Prepaid-Konto bei Überschreitungen der Ausgabenlimite, auf Anforderung oder automatisch wenn vordefinierte Kriterien erfüllt sind aus einem anderen Geldkonto vom selben oder von einem anderen Benutzer nachzuladen. Dies erlaubt auch, Geldbeträge von Personen zu Personen zu übertragen. Es können somit auch Debit- oder Kreditgrenzen für geschlossene Gruppen von Benutzern definiert werden.

Die verschiedenen Geldkonten eines Benutzers können von verschiedenen Zahlungsdienstanbietern geführt werden. Jeder Zahlungsdienstanbieter kann seine eigenen Geschäftsbedingungen für die Verwendung seines Dienstes festlegen. Das erfindungsgemässe System und Verfahren weist vorzugsweise Mittel zur Übertragung der Geschäftsbedingungen an den Benutzer auf, womit sichergestellt wird, dass diese Geschäftsbedingungen vom Benutzer gelesen wurden, und zur Sendung einer Bestätigung, dass diese Geschäftsbedingungen akzeptiert wurden.

Die Verfügbarkeit beziehungsweise die Sperrung eines bestimmten Geldkontos, das an eine Identifizierungskarte gebunden ist, kann abhängig von internen Parametern des Mobilfunknetzes veranlasst werden. Es ist zum Beispiel im Rahmen der Erfindung möglich, ein bestimmtes Geldkonto zu sperren, wenn sich der Benutzer ausserhalb eines vordefinierten geographischen Gebiets befindet und/oder während vordefinierten Zeitperioden.

### Kurze Beschreibung der Figuren

Die vorliegende Erfindung wird mit Hilfe der als Beispiel gegebenen Beschreibung besser verständlich und durch die beiliegenden Figuren veranschaulicht, wobei zeigen
- Fig. 1: ein Blockschema, das den Informationsfluss in einer bevorzugten Ausführungsform des Systems der Erfindung zeigt, und
- Fig. 2: ein Blockschema, das mögliche Datenkanäle zwischen den verschiedenen Akteuren des Systems als Beispiel veranschaulicht.

### Wege zur Ausführung der Erfindung

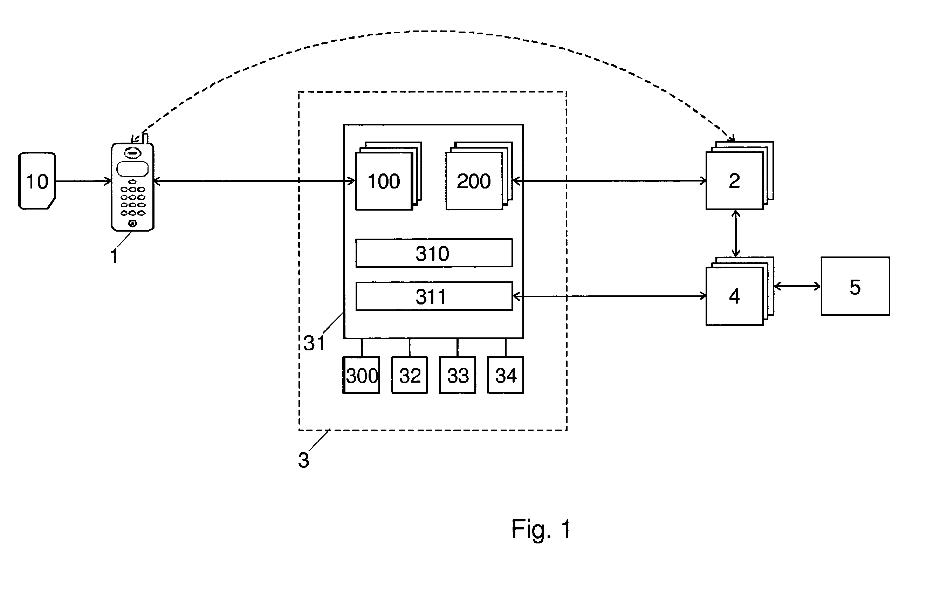

Figur 1 zeigt ein Blockschema mit den Hauptakteuren oder Komponenten des Systems. Im dargestellten Beispiel umfasst das System eine Vielzahl von Benutzern (Mobilteilnehmern), die je über ein Mobilgerät 1 verfügen. Mit "Mobilgerät" werden in diesem Kontext sowohl tragbare Geräte gemeint als auch Geräte, die an einem Fixnetz angeschlossen sind, die aber durch ein Identifizierungsmodul statt durch den Anschlusspunkt an das Netzwerk identifiziert werden.

In der Folge der Beschreibung und in den Ansprüchen wird mit dem Bezugszeichen 1 entweder der Benutzer (Kontoinhaber) oder das Mobilgerät 1 gekennzeichnet, ausser wenn ausdrücklich ein Unterschied gemacht wird. Die Mobilgeräte umfassen ein Identifizierungsmodul 10 zur Identifizierung des Benutzers in einem Mobilfunknetz. Das Identifizierungsmodul 10 ist vorzugsweise persönlich, tragbar, und kann vom Mobilgerät getrennt werden; es ist vorzugsweise eine Chipkarte. Das Mobilgerät 1 kann beispielsweise ein digitales zellulares Mobiltelefon sein (zum Beispiel ein GSM, HSCSD, GPRS, EDGE, CDMA) oder ein UMTS-Mobiltelefon, oder ein Rechner (zum Beispiel ein PDA) oder ein Laptop mit einer kontaktlosen Schnittstelle (zum Beispiel mit einer GSM, HSCSD, GPRS, EDGE, CDMA, UMTS oder WLAN-Erweiterungskarte). Als Variante könnte das Mobilgerät 1 auch ein ad-hoc Gerät sein, das Verbindungen in ein ad-hoc Netzwerk aufbauen kann. Das Identifizierungsmodul 10 ist beispielsweise eine SIM-Karte.

Das Benutzer-Mobilgerät 1 kann an die Infrastruktur 3 eines Mobilnetzwerks angeschlossen werden, um Sprach- und Datenverbindungen mit anderen Geräten aufzubauen. Mit Infrastruktur 3 ist in dieser Beschreibung und in den Ansprüchen jener Teil eines Netzwerkes gemeint, welcher vom Betreiber des Netzwerkes verwaltet und gesteuert wird, einschliesslich die Basis-Stationen, Switches, Heimdateiregister, Verrechnungszentren, Server für zusätzliche Dienste usw. Die Infrastruktur 3 des erfindungsgemässen Systems umfasst eine Zahlungsplattform 31, die später näher beschrieben wird, zusätzliche Module 300, 32, 33, 34 sowie konventionelle Komponenten, die hier nicht beschrieben werden.

Ebenfalls an diese Infrastruktur 3 angeschlossen sind eine Vielzahl von Anbietern 2, die den Benutzern 1 gegen Bezahlung Produkte, Informationen oder Dienstleistungen anbieten. Wie später erläutert, können Benutzer 1 manchmal auch Anbieter sein, während Anbieter 2 auch Produkte oder Dienstleistungen von anderen Anbietern oder Benutzer bestellen und bezahlen können, so dass die formelle Trennung zwischen Benutzern und Anbietern eher theoretisch ist. Anbieter können beispielsweise Händler (einschliesslich online Händler, Händler im Detailverkauf, Ticketverkäufer, Telekom-Mehrwertdienstanbieter und/oder Zahlungsautomaten) sein.

Anbieter verfügen über Anbieterzahlungsmodule, zum Beispiel POS-Terminals (Point-of-Sale) oder Zahlungsapplikationen. In der Folge der Beschreibung und in den Ansprüchen wird mit dem Bezugszeichen 2 entweder der Anbieter oder sein Anbieterterminal gekennzeichnet, ausser wenn ausdrücklich ein Unterschied gemacht wird.

Benutzer 1 und Anbieter 2 verfügen je über ein oder mehrere Geldkonten bei einem oder mehreren Finanzinstituten 5 und auf die über eine Vielzahl von Zahlungsdienstanbietern 4 zugegriffen werden kann. Zahlungsdienstanbieter sind beispielsweise Kreditkarten-Firmen, Debitkartenfirmen, Postämter und anderen Organisationen, die Zahlungskarten herausgeben, einschliesslich der Mobilfunknetzbetreiber. Finanzinstitutes sind zum Beispiel Banken, Post und andere Organisation die Geldkonten von Dritten verwalten. Jeder Zahlungsdienstanbieter 4 bietet einen oder mehrere Zahlungsdienste an, welche von Benutzern und Anbietern affiliert werden können. Jeder Benutzer und Anbieter verfügt bei den Finanzinstituten über ein Geldkonto für jeden affilierten Zahlungsdienst. Bei einem Kredit- oder Debitkartendienst wird das Geldkonto typischerweise beim Finanzinstitut abgelegt; bei Wertkarten hingegen befindet sich der Geldbetrag auf einem Geldkonto in einer Benutzerchipkarte.

Als Sonderfall von Geldkonten, die an eine Karte 10 gebunden sind, sind Mobilfunknetz Prepaid- und Postpaid-Geldkonten zu erwähnen. Diese Geldkonten werden vor allem zur Bezahlung von Diensten des Mobilfunknetzbetreibers verwendet, unter anderem zur Bezahlung von Sprach- und Datenverbindungen durch das Netz, zum Kauf von zusätzlichen Diensten, einschliesslich das Nachladen von Ringtönen, Bildern, usw.

Zahlungsdienstanbieter verwenden den Server 4, um Benutzer für eine Transaktion zu identifizieren beziehungsweise zu authentifizieren, und um Geldtransaktion zu gestatten oder zu sperren. Zahlungsdienstanbieter können ausserdem Schwarzlisten von schlechten Zahlern und unerwünschten Benutzern aufbauen. Clearing-Operationen, Sendung von Rechnungen und Kontoauszügen, Nachladen von Prepaid-Konten und ähnliche Operationen werden auch von individuellen Zahlungsdienstanbietern 4 (beispielsweise mittels angeschlossener Finanzrechner 5) durchgeführt.

Gemäss den bisherigen Zahlungsverfahren bekommt jeder Benutzer eine physische Karte, um seine Affiliation an einen Zahlungsdienst vor einer Geldtransaktion zu beweisen. Jedes Geldkonto wird dann an eine andere Karte gebunden. Will ein Benutzer für seine verschiedenen Zahlungszwecke mehrere Debit-, Kredit-, und/oder Wertkarten affiliieren, muss er mehrere Zahlungskarten mitführen und für jede Zahlungstransaktion die passende auswählen, was sich als unpraktisch und sicherheitsproblematisch erweist.

In einer bevorzugten Ausführungsform werden mehrere Geldkonten, die mehreren Zahlungsdiensten von mehreren Zahlungsdienstanbietern 4 entsprechen können, an ein gemeinsames Identifizierungsmodul 10 gebunden. In einer bevorzugten Variante dient die SIM-Karte 10, die zur Identifizierung des Benutzers 1 in einem Mobilfunknetz bestimmt ist, als multifunktionelle Zahlungskarte, die an mehrere Geldkonten gebunden ist. Die Affiliation an mehreren Zahlungsdienste wird somit mit dem Besitz einer einzigen Chipkarte bewiesen.

Umgekehrt kann auch ein einzelnes Geldkonto an mehrere Identifizierungsmodule gebunden sein. Dies erlaubt zum Beispiel, dass in einer Familie oder in einem Unternehmen jedes Mitglied über sein eigenes Identifizierungsmodul verfügt, um auf ein gemeinsames Geldkonto zuzugreifen.

Das Identifizierungsmodul 10 enthält einen Speicher von jenen Bereichen die vom Mobilfunkbetreiber den Zahlungsdienstanbietern zum Ablegen der benötigten Daten zur Verfügung gestellt werden. Jeder Zahlungsdienstanbieter verwendet somit einen vorbestimmten Speicherbereich der SIM-Karten der affiliierten Benutzer, in welchem er Daten (beispielsweise Kartennummer, Geldbeträge, Spendegrenze, Transaktions-Logfiles, temporäre oder permanente dienstabhängige Daten und Programme usw.) ablegen kann. In einer anderen bevorzugten Variante der Erfindung werden diese Daten (oder ein Teil dieser Daten) in einer Zahlungsplattform 31 in der Infrastruktur 3 des Mobilfunknetzes abgelegt. Die verschiedenen Geldkonten, an welche eine Identifizierungskarte 10 gebunden ist, werden somit in einem virtuellen Wallet 100 in der Plattform 31 zusammengeführt. Ein logischer Link zwischen einer physischen Karte 10 und dem entsprechenden Wallet 100 von Geldkonten affilierter Zahlungsdienste kann beispielsweise über die Kartennummer IMSI (International Mobile Subscriber Identity) die MSISDN (Mobile Subscriber ISDN Number) und/oder die ICCID (Integrated Circuit Identification) erfolgen.

Mindestens gewisse Geldkonten haben eine feste oder variable Ausgabenlimite. Geldkonten, die an einen Kreditkarten-Zahlungsdienst gebunden sind, haben meistens eine periodische Ausgabenlimite und oft auch eine Ausgabelimite für jede einzelne Zahlungstransaktion. Geldkonten für Debitkarten haben oft auch eine periodische Ausgabenlimite; ausserdem darf der verfügbare Saldo nicht negativ sein oder nicht unter eine vorbestimmte Kreditgrenze gelangen. Bei den meisten Wertkarten entspricht die Ausgabenlimite dem verfügbaren Saldo. Für Module, die an mehrere Geldkonten und/oder mehrere Zahlungsdienste gebunden sind, können ausserdem kollektive Ausgabenlimiten vorgesehen werden. Auf ähnliche Weise können alle Dienste und Geldkonten eines Anbieters 2 in einem Wallet 200 in der Zahlungsplattform 31 zusammengeführt werden, wobei ein logischer Link zwischen einem Anbieter 2 und dem entsprechenden Wallet 200 über eine Anbieter-Identifizierung erfolgen kann.

Das erfindungsgemässe System umfasst ausserdem vorzugsweise ein automatisches Bestimmungsmodul, um das ideale Paar von Geldkonten, welches vom Mobilteilnehmer-Identifizierungsmodul und von dem Anbieter-Zahlungsterminal für eine Zahlungstransaktion verwendet wird, automatisch zu bestimmen.

Die Infrastruktur 3 des Mobilfunknetzes umfasst ausserdem vorzugsweise ein Standortbestimmungsmodul 300, um den Standort des Benutzers zu bestimmen. Dieser Standort kann die Zelle des Mobilfunknetzes sein, in welcher sich der Benutzer momentan befindet, oder vorzugsweise mit einer besseren Genauigkeit anhand von Triangulationsverfahren aus Signalen von mehreren Antennen und/oder mit Satelliten-Standortbestimmungsmitteln ermittelt werden. Der ermittelte Standort kann verwendet werden, um Geldkonten in bestimmten Bereichen zu sperren oder zuzulassen.

Ein Cryptoserver 32 ist in der Infrastruktur 3 vorhanden, um Meldungen mit den Benutzern 1, mit den Anbietern 2 und/oder mit den Zahlungsdienstanbietern 4 zu verschlüsseln beziehungsweise zu entschlüsseln. Der Cryptoserver 32 kann auch verwendet werden, um die Authentizität, die Integrität und den Ursprung der Meldung zu prüfen und gegebenenfalls zu bestätigen.

Mit 33 wird ein Betrugsdetektionsmodul veranschaulicht. Dieses Modul verwendet sowohl Parameter, die innerhalb des Mobilfunknetzes bekannt sind (zum Beispiel der Benutzerstandort und der Anbieterstandort) und transaktionsspezifische Parameter (zum Beispiel die Identität der Transaktionspartner oder den Transaktionsbetrag) um verdächtige Transaktionen oder Karten 10 aufzudecken. In einer nicht dargestellten Variante wird dieses Modul von den Zahlungsdienstanbietern (statt vom Mobilfunknetzbetreiber) betrieben.

Das Element 34 ist eine Datenbank, in welcher die Geschäftsbedingungen der verschiedenen Zahlungsdienstanbieter abgelegt sind. Mittel sind vorgesehen, um sicherzustellen, dass diese Bedingungen von den Benutzern akzeptiert sind, bevor ein Geldkonto freigeschaltet wird.

Das erfindungsgemässe proaktive Nachlademodul 311 wird zur Nachladung der verschiedenen Geldkonten (insbesondere der Wert- und Debitkonten) verwendet. Wie weiter unten beschrieben kann diese Nachladung (oder auch Belastungen) automatisch von verschiedenen Ereignissen initiiert werden.

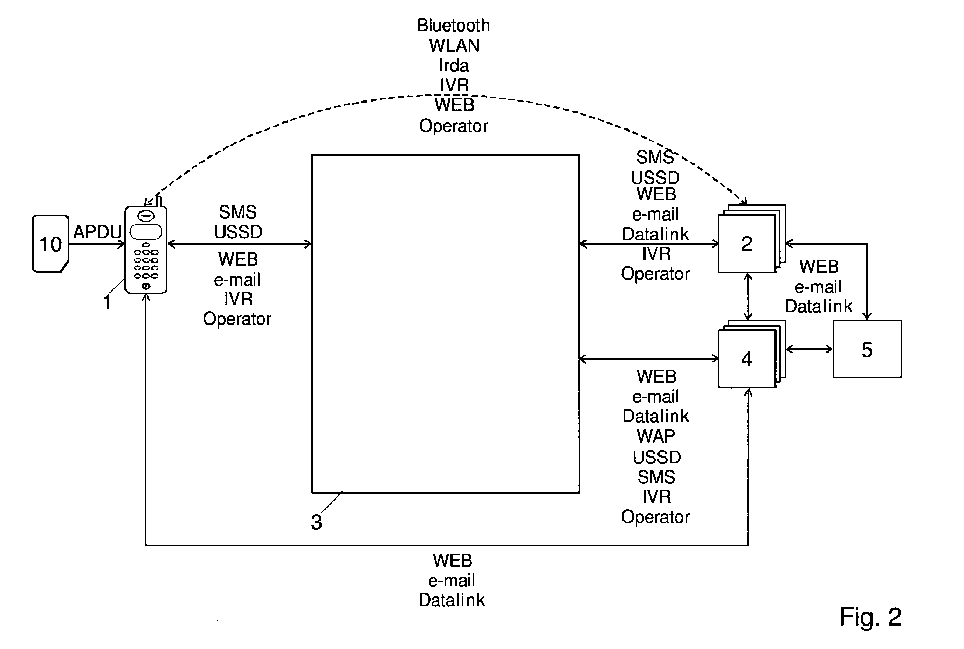

Die Figur 2 zeigt die möglichen Datenkanäle, die für eine Zahlungstransaktion zwischen den verschiedenen Aktoren des Systems verwendet werden können.

Das Identifizierungsmodul 10 wird typischerweise als ISO-Chipkarte im Mobilgerät 1 untergebracht und kommuniziert über APDU-Befehle mit diesem Mobilgerät. Das Mobilgerät ist beispielsweise ein GSM-Mobilgerät und kann somit über SMS (Short Message System) oder USSD (Unstructured Supplementary Service Data) oder über geroutete Datenpakete, Meldungen mit der Plattform 31 austauschen. Als Variante können Daten auch über Internet (zum Beispiel mit einem WEB oder WAP-Browser oder per E-Mail) zwischen dem Mobilgerät 1 und der Plattform 31 übertragen werden. In einer Variante verfügt die Plattform 31 über eine IVR-Schnittstelle (Interactive Voice Response) mit welcher über den Sprachkanal auch Sprachbefehle übertragen werden können. In einer anderen Variante können Daten auch über einen menschlichen Operator (zum Beispiel in einem Call Center) kommuniziert werden. In noch einer anderen Variante werden Daten über eine kontaktlose Schnittstelle, zum Beispiel eine WLAN oder Bluetooth-Schnittstelle, an die Plattform 31 gesendet.

Auf ähnliche Weise können Anbieter 2 ebenfalls über SMS, USSD, E-Mail, WEB, WAP, über einen IVR und/oder über einen menschlichen Operator, Daten mit der Zahlungsplattform 31 austauschen. Andere Datenverbindungen (zum Beispiel über geroutete Datenpakete oder über einen anderen Datenkanal) können im Rahmen der Erfindung auch vorgesehen werden.

Je nach Zahlungsablauf kann auch eine direkte Verbindung zwischen dem Benutzer 1 und dem Anbieter 2 aufgebaut werden, beispielsweise über Bluetooth, WLAN, WEB (zum Beispiel über eine Transaktionsreferenz), IVR, über einen menschlichen Operator oder über eine infrarote Schnittstelle, oder indem die SIM-Karte oder die gesamte Mobilstation galvanisch mit einem Terminal des Anbieters verbunden wird. Auf diese Weise können zumindest ein Teil der Zahlungsdaten schnell und kostenlos direkt übertragen werden.

Zahlungsdienstanbieter 4 brauchen keine Mobilität und werden somit vorzugsweise über einen festen Datenlink (zum Beispiel über WEB, E-Mail, geroutete Datenpakete, oder über einen anderen Datenlink) mit der Plattform 31, mit den Benutzern 1, (wenn nötig) mit den Anbietern 2 und gegebenenfalls mit den Finanzservern 5 verbunden. Die Verbindung zwischen der Zahlungsplattform 31 und den Zahlungsdienstanbietern 4 ist vorzugsweise gesichert (zum Beispiel über ein virtuelles privates Netzwerk). Zahlungsdaten zwischen der Zahlungsplattform 31 und den Zahlungsdienstanbietern können auch in Daten die mehrere Zahlungstransaktionen betreffen gesendet werden. Verbindungen mit den Benutzern 1 und mit den Anbietern 2 können auch über Fax oder Post vorgesehen werden.

Wie bereits erwähnt können sowohl Benutzer 1 als auch Anbieter 2 an mehrere Zahlungsdienste mehrerer Zahlungsdienstanbieter affiliiert werden. Dementsprechend können Identifizierungsmodule 10 und Terminals der Anbieter an mehrere Geldkonten 100 beziehungsweise. 200 gebunden werden. Will ein Benutzer 1 eine Zahlungstransaktion mit einem Anbieter 2 ausführen, muss vorerst entschieden werden, mit welchem Zahlungsdienst die Transaktion durchgeführt wird. Beispielsweise muss entschieden werden, ob die Transaktion mit einem Kreditkarten- Debitkarten- oder Wertkarten-Zahlungsdienst durchgeführt wird und mit welchem Anbieter dieses Typs von Diensten.

Diese Entscheidung wird vorzugsweise automatisch vom Bestimmungsmodul 310 getroffen. In der dargestellten bevorzugten Ausführungsform befindet sich dieses Modul in der Zahlungsplattform 31 und wird somit vom Betreiber des Mobilfunknetzes betrieben. Dies hat den Vorteil, dass dieser Betreiber gegenüber den verschiedenen Zahlungsdienstanbietern neutral sein kann und dass kein Anbieter bevorzugt wird. Ausserdem kann das Modul 310 Parameter verwenden, die innerhalb der Infrastruktur 3 des Netzes bestimmt und bekannt sind.

Das Bestimmungsmodul besteht vorzugsweise aus einem Software und/oder Hardware-Modul, beispielsweise aus einer Software-Anwendung, die von einem Server in der Infrastruktur 3 des Mobilfunknetzes ausgeführt wird. Der Server kann über verschiedene Datenkanäle mit den Mobilgeräten 1, mit den Terminals der Anbieter 2 und mit den Zahlungsdienstanbietern 4 kommunizieren.

Die Entscheidung, ein bestimmtes Geldkonto für eine bestimmte Zahlungstransaktion zu verwenden, kann zum Beispiel von folgenden Parametern abhängig sein: Transaktionsbetrag, Bonuspunkte, vorbestimmte Mobilteilnehmerpräferenzen, Sicherheitsfaktoren, Anonymität, Standort des Benutzers, Identität des Mobilfunknetzes in welchem der Mobilteilnehmer angemeldet ist, Wechselkurs mit den verschiedenen Geldkonten, Gebühren bei der Verwendung der verschiedenen Geldkonten, Zinsen, verfügbarer Saldo, periodische Kredit- oder Debitgrenzen, Zeit, Datum und/ oder Wochentag, Logfile früherer Transaktionen, verwendetes Mobilgerät oder Mobilgerättyp, weisse beziehungsweise schwarze oder graue Liste von Anbietern und/oder Mobilteilnehmern, usw.

Andere Parameter und Prioritäten können von den Anbietern 2 und/oder von den Zahlungsdienstanbietern vorgesehen werden.

Aus Datenschutzgründen werden Zahlungstransaktionsdaten vorzugsweise transparent durch das Mobilfunknetz übertragen; der Betreiber der Zahlungsplattform 31 hat in diesem Fall keine Möglichkeit, auf die Zahlungsdaten der unterschiedlichen Benutzer oder Anbieter zuzugreifen. In einer Variante werden mindestens gewisse Zahlungstransaktionsdaten, die für mindestens gewisse Zahlungsdienstanbieter bestimmt sind, vorzugsweise mit Zustimmung der Benutzer oder Anbieter der Zahlungsplattform 31 zugänglich gemacht. Dies hat den Vorteil, dass die Zahlungsplattform mit den Zahlungsdaten verschiedener Benutzer, Anbieter und Zahlungsdienstanbieter zusätzliche Mehrwertdienste anbieten kann, einschliesslich:
■ Sendung von konsolidierten Rechnungen an Benutzer und konsolidierten Gutschriften an Anbieter, in welchen Transaktionen, die über mehrere Zahlungsdienstanbieter durchgeführt wurden, zusammengefasst sind.
■ Bestimmung von konsolidierten Kredit- und/oder Debitgrenzen, um einen maximalen Ausgabebetrag pro Zeitspanne über mehrere Geldkonten festzulegen. Dies erlaubt eine höhere Sicherheit für den Benutzer, für die Anbieter und für die Zahlungsdienstanbieter, da die Gesamtausgaben mit allen Geldkonten eines Identifizierungsmoduls begrenzt sind.
■ Detektion von Betrügen durch Überwachung des Verhaltens des Benutzers mit mehreren Geldkonten. Dieses Merkmal wird weiter unten ausführlicher beschrieben.
■ Geldtransaktionen zwischen mehreren Geldkonten, die an ein gemeinsames Identifizierungsmodul gebunden sind. Dies erlaubt zum Beispiel, ein Wert- oder Debitkonto aus einem anderen Geldkonto nachzuladen, zum Beispiel automatisch, wenn gewisse Kriterien erfüllt sind.
■ Ermittlung von Statistiken und Berichten über die Verwendung der verschiedenen Geldkonten. Dies erlaubt unter anderem Zahlungsdienstanbietern, Werbekampagnen und Angebote besser an die Bedürfnisse der Benutzer anzupassen.
■ Gleichzeitige Sperrung beziehungsweise Entsperrung aller Geldkonten (die an ein gestohlenes oder verlorenes Identifizierungsmodul gebunden sind) durch den Betreiber oder durch den Benutzer.
■ Bonuspunktesammlungsprogramme über mehrere Geldkonten mehrerer Zahlungsdienstanbieter.
■ Direkte Transaktionen zwischen Geldkonten eines oder mehrerer Benutzer, ohne dass Transaktionsdaten an externe Zahlungsdienstanbieter gesendet werden. Dies erlaubt zum Beispiel, ein Prepaid-Konto eines Benutzers für die Verwendung des Mobilnetzwerkes mit einem anderen Geldkonto eines anderen Benutzers nachzuladen.
■ Verwendung von Benutzerparametern (Namen, Adresse, Solvenz, usw.), die für einen bestimmten Zahlungsdienst eingegeben wurden, für einen anderen, später angegliederten Zahlungsdienst eines anderen Zahlungsdienstanbieters.

In einer bevorzugten Variante werden Zahlungstransaktionsdaten anonymisiert, bevor sie der Zahlungsplattform zugänglich gemacht werden. Zu diesem Zweck wird die Benutzeridentifikation, die mit bestimmten Zahlungstransaktionsdaten verknüpft ist, in einem Anonymizer durch ein für den Netzbetreiber ungenügend kennzeichnendes Alias ersetzt. Auf diese Weise können anonyme Zahlungsdaten in der Zahlungsplattform gesammelt, verwendet und statistisch bewertet werden, ohne Datenschutzgesetze zu verletzen.

Zur Detektion von Betrügen werden vorzugsweise sowohl Parameter des Mobilfunknetzes 3 als auch Parameter des oder der Zahlungsdienstanbieter 4 verwendet. Im dargestellten Beispiel werden Betrüge von einem Betrugsdetektionsmodul 33 (zu Beispiel ein Server mit geeigneten Software-Anwendungen) in der Infrastruktur 3 des Mobilfunknetzes ermittelt. Dieser Modul 33 erhält Parameter des Mobilfunknetzes (das heisst Parameter, die innerhalb des Netzes ermittelt werden) direkt von der Zahlungsplattform 31 und/oder von anderen Hardware- und Software Komponenten der Netzwerkinfrastruktur. Parameter der Zahlungsdienstanbieter werden vorzugsweise über den entsprechenden Datenlink aus den Servern 4 der Zahlungsdienstanbieter herausgeholt. Alternativ können mindestens gewisse Zahlungsdienstanbieter-Parameter aus den durch die Zahlungsplattform 31 übertragenen Zahlungstransaktionsdaten ermittelt werden; in diesem Fall können aus Datenschutzgründen mindestens gewisse Transaktionsdaten anonymisiert sein.

Da die Zahlungsplattform 31 und das Betrugsdetektionsmodul 33 in dieser Variante zentralisiert sind, können Parameter von verschiedenen Zahlungsdienstanbietern 4 kombiniert werden, um dubiose Verhaltensweisen zu ermitteln. Beispielsweise können Zahlungstransaktionsdaten mit einem Kreditkartendienstanbieter und mit einem Debitkartendienstanbieter zusammen gewertet werden, um zu bestimmen, ob das Benutzerverhalten verdächtig ist. Wird ein Betrug oder Betrugsversuch mit einem Zahlungsdienstanbieter aufgedeckt, können alle Geldkonten, die an die betroffene Karte gebunden sind, gleichzeitig gesperrt werden.

Wir werden jetzt das erfindungsgemässe Verfahren zur automatischen Nachladung und Belastung von an die Karte gebundenen Geldkonten näher beschreiben. Erfindungsgemäss kann der Karteninhaber selber Kriterien festlegen, die vom Nachlademodul 311 verwendet werden um zu bestimmen, wann, wie und bei welchen externen Ereignissen jedes Geldkonto, insbesondere Wert- und Debitkonten, nachgeladen beziehungsweise belastet werden müssen. Die Kriterien, die von jedem Kontoinhaber zur Nachladung jedes Konto festgelegt werden, sind vorzugsweise in einer nicht dargestellten Datenbank im Nachlademodul 311 abgelegt. Diese Kriterien können vom Kontoinhaber über eine Schnittstelle (beispielsweise über eine graphische Schnittstelle wie das Web oder WAP) oder über SMS, USSD, e-mail, IVR (Interactive Voice Response System), über einen menschlichen Operator am Schalter oder am Telefon usw. editiert werden.

Folgende Ereignisse können von einem Wertkontoinhaber festgelegt werden, um Geldbeträge automatisch nachzuladen oder zu belasten:
■ Kriterien, die innerhalb des Mobilfunknetzes ermittelt werden. Beispielsweise kann ein Wertkontoinhaber festlegen, dass ein Wertkonto automatisch nachgeladen oder belastet werden muss, wenn er sich an einem bestimmten (vom Standortortbestimmungsmittel ermittelten) Standort befindet. Wertkontoinhaber können somit bestimmte Wertkonten automatisch nachladen lassen, wenn sie sich in geographischen Gebieten befinden, wo ihre Bedürfnisse am grössten sind - zum Beispiel im Ausland, in bestimmten Geschäften, usw. - und dann automatisch leeren, wenn sie diese Gebiete verlassen. Die Mobilfunknetzidentität, die innerhalb der Infrastruktur des Mobilfunknetzes ermittelte Zeit und das Profil des Mobilteilnehmers beim Mobilfunknetzbetreiber können auch als Kriterien verwendet werden.
■ Kriterien, die vom Zustand des Wertkontos, oder eines anderen Geldkontos, abhängig sind. Ein Kontoinhaber (Käufer oder Händler) kann somit bestimmen, dass ein Wertkonto automatisch nachgeladen werden muss, wenn der Saldo der zur Verfügung steht kleiner als eine vorbestimmte Schwelle ist. Er könnte auch bestimmen, dass das Konto aus Sicherheitsgründen belastet werden soll, wenn der Geldbetrag auf diesem Konto höher ist als eine zweite Schwelle. Nachladungen und Belastungen können auch vom Saldo eines oder mehreren anderen Geldkonten (zum Beispiel vom Saldo auf dem oder den belasteten beziehungsweise nachgeladenen Geldkonten) abhängig sein.
■ Zinsen auf dem Quellkonto, das belastet beziehungsweise geladen wird.
■ Wechselkurs. Geldbeträge können automatisch zwischen Wertkonten in unterschiedlichen Währungen gewechselt und überwiesen werden, wenn die Wechselkurse eine vorbestimmte Schwelle erreichen, und/oder wenn sich der Karteninhaber im Ausland befindet oder bewegt.
■ Automatische periodische Nachladung oder Belastung eines Wertkontos.
■ Programmierte Nachladung oder Belastung eines Wertkontos zu vorbestimmten Zeiten, beispielsweise an vorbestimmten Datum, Tageszeiten, Ferien- und/oder Wochentagen.
■ Nachladung oder Belastung, die durch eine Information von einer Drittpartei initiiert wird. Beispielsweise kann ein Wertkonto automatisch nachgeladen werden, sobald ein Wert auf einer bestimmten Web-Seite eine bestimmte Schwelle erreicht.
■ Nachladung eines oder mehrere Geldkonten im Rahmen einer Werbeaktion. Es können zum Beispiel alle Karteninhaber belohnt werden, die sich in einem bestimmten geographischen Gebiet befinden, die an einen bestimmten Zahlungsdienst affiliert sind oder die genügend Bonuspunkte in einem Bonuspunktesammlungsprogramm gesammelt haben.
■ Automatische Ausgleichung der Geldbeträge auf mehreren Wertkonten eines oder mehrer Inhaber. Familienmitglieder können beispielsweise Geld automatisch zwischen verschiedenen Wertkonten, die an die Familienmitgliederkarten gebunden sind, verteilen. Die ausgeglichenen Wertkonten können an das gleiche oder an andere Bankkonten gebunden sein.
■ Nachladung oder Belastung, die von Angaben in einem elektronischen Kalender des Wertkontoinhabers initiiert wird. Der elektronische Kalender kann im Mobilgerät oder in einem an das Internet angeschlossene Rechner des Wertkontoinhabers geführt werden. Nachladungs- oder B-elastungsbefehle können in diesem Kalender als spezielle Ereignisse aufgeführt werden, und/oder automatisch durch übliche Ereignisse (zum Beispiel Termine, Ferienangaben, usw.) initiiert werden.
■ Automatische Ladung bei der Eröffnung eines Geldkontos.
■ Automatische Belastung bei dem Schliessen eines Geldkontos.
■ Usw.

Diese Kriterien können auch kombiniert werden. Unterschiedliche Kriterien oder Kombinationen von Kriterien können für verschiedene an eine gleiche Karte gebundene Wertkonten festgelegt werden.

Der Wertkontoinhaber kann vorzugsweise bestimmen, welchen Geldkonten der automatisch nachzuladende Geldbetrag belastet werden muss, beziehungsweise auf welche Geldkonten der automatisch belastete Geldbetrag überwiesen werden muss. Es kann sich dabei um ein anderes Wertkonto handeln, das an die gleiche Karte gebunden ist, oder um ein Debit- oder Kreditkonto, oder sogar um ein oder mehrere Geldkonten von anderen Inhabern.

Wie bereits erwähnt können die verschiedenen Geldkonten, zwischen denen Geldbeträge automatisch überwiesen werden, in unterschiedlichen Währungen geführt werden. In diesem Fall kann das Nachlademodul die überwiesenen Geldbeträge automatisch wechseln oder wechseln lassen.

Um die Sicherheit zu erhöhen, können Wertkontoinhaber vorzugsweise eine periodische Grenze festlegen, die den maximalen Betrag angibt, der in einem bestimmten Wertkonto (oder in allen Wertkonten einer Karte) während einer bestimmten Periode nachgeladen werden darf. Umgekehrt können auch maximale periodische Belastungsgrenzen festgelegt werden.

Der Betrag, der automatisch nachgeladen beziehungsweise belastet wird, kann auch vom Wertkontoinhaber festgelegt werden und kann von den erwähnten externen Ereignissen und Kriterien abhängig sein.

Geldbeträge können vollautomatisch überwiesen werden, wenn ein vom Wertkontoinhaber vorbestimmtes Ereignis eintritt. Wird das Wertkonto aus einem Geldkonto eines anderen Inhabers nachgeladen, wird vorzugsweise auch an den benannten anderen Inhaber eine Bestätigungsanfrage gesendet.

In der dargestellten bevorzugten Ausführungsform werden automatische Belastungen beziehungsweise Nachladungen von Geldbeträgen vom Nachlademodul 311 in der Infrastruktur 3 des Mobilfunknetzes gesteuert. Dies hat den Vorteil, dass eine einzige zentralisierte Software alle von den Benutzern festgelegten Kriterien prüft und dem Benutzer ermöglicht, diese Kriterien über eine einzige Oberfläche, zu editieren. Ausserdem können dadurch auch Kriterien verwendet werden, die nur innerhalb des Mobilfunknetzes 3 ermittelt werden und bekannt sind, beispielsweise den Mobilteilnehmerstandort.

Es wäre aber auch möglich, das Nachlademodul 311 in einem Server bei einem der Zahlungsdienstanbieter 4 (oder bei einer anderen Drittpartei) vorzusehen. In einer anderen Variante könnte sich das Nachlademodul auch im Identifizierungsmodul 10 und/oder im Mobilgerät des Wertkontoinhabers 1 befinden; diese Lösung ist insbesondere geeignet, um Geldbeträge zwischen Geldkonten zu überweisen, die an das gleiche Identifizierungsmodul 10 gebunden sind.

Das erfindungsgemässe Verfahren bzw. System kann unter anderem verwendet werden, um Geldtransaktionen von Benutzer zu Benutzer (P-to-P) durchzuführen.

### Bezugszeichenliste

- 1: Benutzer, Mobilgerät
- 10: Identifizierungsmodul
- 100: Wallet, Geldkonto
- 2: Anbieter, Anbieterterminal
- 200: Wallet, Geldkonto
- 3: Infrastruktur
- 300: Standortbestimmungsmodul
- 31: Zahlungsplattform
- 310: Geldkontenbestimmungsmodul
- 311: Nachlademodul
- 32: Cryptoserver
- 33: Betrugsdetektionsmodul
- 34: Datenbank
- 4: Zahlungsdienstanbieter
- 5: Finanzinstitut

## Patentansprüche

1. Verfahren zur Verwaltung eines Wertkontos, das an ein tragbares persönliches Identifizierungsmodul (10), welches ein Mobilgerät (1) in einem Mobilfunknetz identifiziert, gebunden ist,
wobei Geldbeträge automatisch durch ein Nachlademodul (311) in Abhängigkeit von externen Ereignissen in das benannte Wertkonto nachgeladen oder aus dem benannten Wertkonto belastet werden,
**dadurch gekennzeichnet, dass**
die externen Ereignisse gesetzte Ereignisse in einem von dem Inhaber des Wertkontos geführten elektronischen Kalender sind.

2. Verfahren gemäss Anspruch 1, in welchem die benannten Ereignisse Parameter umfassen, die innerhalb des benannten Mobilfunknetzes bestimmt werden.

3. Verfahren gemäss einem der Ansprüche 1 oder 2, in welchem das benannte Wertkonto automatisch nachgeladen wird, wenn der Saldo, der zur Verfügung steht, kleiner ist als eine vorbestimmte Schwelle.

4. Verfahren gemäss einem der Ansprüche 1 oder 2, in welchem das benannte Wertkonto automatisch belastet wird, wenn der Saldo, der zur Verfügung steht, höher ist als eine vorbestimmte Schwelle.

5. Verfahren gemäss einem der Ansprüche 1 bis 4, in welchem das benannte Wertkonto automatisch nachgeladen oder belastet wird, wenn die Zinsen auf einem Quellkonto eine vorbestimmte Schwelle erreichen.

6. Verfahren gemäss einem der Ansprüche 1 bis 5, in welchem das benannte Wertkonto periodisch automatisch nachgeladen oder belastet wird.

7. Verfahren gemäss einem der Ansprüche 1 bis 6, in welchem das benannte Wertkonto in Abhängigkeit von einem Ereignis, das von einer Drittpartei getriggert wird, nachgeladen beziehungsweise belastet wird.

8. Verfahren gemäss einem der Ansprüche 1 bis 7, in welchem das benannte Wertkonto automatisch nachgeladen beziehungsweise belastet wird, wenn sich der Identifizierungsmodulinhaber in einem vorbestimmten Gebiet befindet.

9. Verfahren gemäss einem der Ansprüche 1 bis 8, in welchem das benannte Wertkonto zu vorbestimmten Zeiten automatisch nachgeladen beziehungsweise belastet wird.

10. Verfahren gemäss einem der Ansprüche 1 bis 9, in welchem das benannte Wertkonto aus dem beziehungsweise auf ein anderes an das benannte Identifizierungsmodul gebundene Geldkonto nachgeladen beziehungsweise belastet wird.

11. Verfahren gemäss einem der Ansprüche 1 bis 10, in welchem das benannte Wertkonto aus dem beziehungsweise auf ein anderes Wertkonto nachgeladen beziehungsweise belastet wird.

12. Verfahren gemäss einem der Ansprüche 1 bis 11, in welchem das benannte Wertkonto aus dem beziehungsweise auf ein Geldkonto eines anderen Inhabers nachgeladen beziehungsweise belastet wird

13. Verfahren gemäss einem der Ansprüche 1 bis 12, in welchem das benannte Wertkonto aus dem beziehungsweise auf ein vom benannten Wertkontoinhaber bestimmten Wertkonto nachgeladen beziehungsweise belastet wird.

14. Verfahren gemäss einem der Ansprüche 1 bis 13, in welchem der Inhaber des Geldkontos, welches zur Nachladung beziehungsweise Belastung des benannten Wertkontos verwendet wird, seine Zustimmung sendet.

15. Verfahren gemäss einem der Ansprüche 1 bis 14, in welchem eine periodische automatische Nachladungs- und/oder Belastungsgrenze gesetzt ist.

16. Verfahren gemäss einem der Ansprüche 1 bis 15, in welchem das benannte Modul an verschiedenen Wertkonten gebunden ist, die in Abhängigkeit von unterschiedlichen Kriterien automatisch nachgeladen beziehungsweise belastet werden.

17. Verfahren gemäss Anspruch 16, in welchem die benannten verschiedenen Wertkonten in verschiedenen Währungen geführt werden.

18. Verfahren gemäss einem der Ansprüche 1 bis 17, in welchem Geldbeträge bei der Überweisung automatisch gewechselt werden.

19. Verfahren gemäss einem der Ansprüche 1 bis 18, in welchem Geldbeträge automatisch gewechselt und zwischen Geldkonten überwiesen werden, die in unterschiedlichen Währungen geführt werden, wenn der Wertkontoinhaber sich in einem anderen geographischen Gebiet bewegt.

20. Verfahren gemäss einem der Ansprüche 1 bis 19, in welchem die benannte Belastung beziehungsweise Nachladung von Geldbeträgen von dem Nachlademodul (311) in der Infrastruktur (3) des benannten Mobilfunknetzes gesteuert wird.

21. Verfahren gemäss einem der Ansprüche 1 bis 20, in welchem die benannte Belastung beziehungsweise Nachladung von Geldbeträgen von dem Nachlademodul (311) in dem Mobilgerät (1) des benannten Wertkontoinhabers gesteuert wird.

22. Verfahren gemäss einem der Ansprüche 1 bis 21, in welchem der Betrag, der nachgeladen beziehungsweise belastet wird, vom Wertkontoinhaber festgelegt wird.

23. Verfahren gemäss Anspruch 1, wobei der elektronische Kalender in dem Mobilgerät des Inhabers des Wertkontos oder in einem an das Internet angeschlossenen Rechner des Inhabers des Wertkontos geführt wird.

24. Verfahren gemäss Anspruch 1 oder 23, wobei die gesetzten Ereignisse Termine oder Ferienangaben sind.

25. Verfahren gemäss Anspruch 1, 23 oder 24, wobei Nachladungs- oder Belastungsbefehle als die gesetzten Ereignisse in dem elektronischen Kalender aufgeführt werden.

26. Proaktives Nachlademodul (311), das in Abhängigkeit von vorbestimmten Ereignissen automatisch Geldbeträge in beziehungsweise auf an Identifizierungsmodule gebundene Benutzerwertkonten nachlädt oder belastet, wobei die Identifizierungsmodule (10) Mobilgeräte (1) in einem Mobilfunknetz identifizieren,
**dadurch gekennzeichnet, dass**
die vorbestimmten Ereignisse gesetzte Ereignisse in einem von dem Inhaber des Wertkontos geführten elektronischen Kalender sind.

## Claims

1. Method for administering a financial account linked to a mobile personal identification module (10) that identifies a mobile device (1) in a mobile communication network,
wherein money amounts are automatically reloaded onto or debited from said financial account by means of a reload module (311) depending on external events,
**characterised in that**
the external events are events specified in an electronic calendar managed by the owner of the financial account.

2. Method according to claim 1, wherein said events comprise parameters that are determined within said mobile communication network.

3. Method according to one of the claims 1 or 2, wherein said financial account is automatically reloaded when the balance that is available is lower than a predetermined threshold.

4. Method according to one of the claims 1 or 2, wherein said financial account is automatically debited when the balance that is available is higher than a predetermined threshold.

5. Method according to one of the claims 1 to 4, wherein said financial account is automatically reloaded or debited when the interest on a source account has reached a predetermined threshold.

6. Method according to one of the claims 1 to 5, wherein said financial account is periodically reloaded or debited automatically.

7. Method according to one of the claims 1 to 6, wherein said financial account is reloaded resp. debited depending on an event that is triggered by a third party.

8. Method according to one of the claims 1 to 7, wherein said financial account is automatically reloaded resp. debited if the owner of the identification module is located in a predetermined area.

9. Method according to one of the claims 1 to 8, wherein said financial account is automatically reloaded resp. debited at predetermined moments.

10. Method according to one of the claims 1 to 9, wherein said financial account is reloaded resp. debited from resp. onto another money account linked to said identification module.

11. Method according to one of the claims 1 to 10, wherein said financial account is reloaded resp. debited from resp. onto another financial account.

12. Method according to one of the claims 1 to 11, wherein said financial account is reloaded resp. debited from resp. onto a money account of another owner.

13. Method according to one of the claims 1 to 12, wherein said financial account is reloaded resp. debited from resp. onto a financial account specified by said owner of the financial account.

14. Method according to one of the claims 1 to 13, wherein the owner of the money account that is used for reloading resp. debiting said financial account sends his/her consent.

15. Method according to one of the claims 1 to 14, wherein a periodic automatic reloading and/or debiting limit is set.

16. Method according to one of the claims 1 to 15, wherein said module is linked to various financial accounts that are reloaded resp. debited depending on different criteria.

17. Method according to claim 16, wherein said different financial accounts are managed in different currencies.

18. Method according to one of the claims 1 to 17, wherein money amounts are automatically converted at the time of the transaction.

19. Method according to one of the claims 1 to 18, wherein money amounts are automatically converted and transferred between money accounts that are managed in different currencies when the owner of the financial account travels in another geographic area.

20. Method according to one of the claims 1 to 19, wherein said debiting resp. reloading of money amounts is controlled by the reload module (311) in the infrastructure (3) of said mobile communication network.

21. Method according to one of the claims 1 to 20, wherein said debiting resp. reloading of money amounts is controlled by the reload module (311) in the mobile device (1) of said owner of the financial account.

22. Method according to one of the claims 1 to 21, wherein the amount that is reloaded resp. debited is determined by the owner of the financial account.

23. Method according to claim 1, wherein the electronic calendar is managed in the mobile device of the owner of the financial account or in an Internet-connected computer of the owner of the financial account.

24. Method according to claim 1 or 23, wherein the specified events are deadlines or holiday dates.

25. Method according to claim 1, 23 or 24, wherein reloading or debiting orders are indicated as specified event in the electronic calendar.

26. Proactive reloading module (311) that automatically reloads or debits money amounts onto resp. from user financial accounts linked to identification modules depending on predetermined events, wherein the identification modules (10) identify mobile devices (1) in a mobile communication network,
**characterised in that**
the predetermined events are specified events in an electronic calendar managed by the owner of the financial account.

## Revendications

1. Méthode pour l'administration d'un compte finance lié à un module d'identification personnel portable (10), qui identifie un appareil mobile (1) dans un réseau de communication mobile,
des montants étant automatiquement rechargés dans ledit compte finance ou débités dudit compte finance par un module de recharge (311) en fonction d'événements externes,
**caractérisée en ce que**
les événements externes sont des événements spécifiés dans un calendrier électronique géré par le titulaire du compte finance.

2. Méthode selon la revendication 1, lesdits événements comprenant des paramètres qui sont déterminés au sein dudit réseau de communication mobile.

3. Méthode selon l'une des revendications 1 ou 2, ledit compte finance étant automatiquement rechargé lorsque le solde disponible est inférieur à un seuil prédéterminé.

4. Méthode selon l'une des revendications 1 ou 2, ledit compte finance étant automatiquement débité lorsque le solde disponible est supérieur à un seuil prédéterminé.

5. Méthode selon l'une des revendications 1 à 4, ledit compte finance étant automatiquement rechargé ou débité lorsque les intérêts sur un compte source atteignent un seuil prédéterminé.

6. Méthode selon l'une des revendications 1 à 5, ledit compte finance étant périodiquement rechargé ou débité automatiquement.

7. Méthode selon l'une des revendications 1 à 6, ledit compte finance étant rechargé respectivement débité en fonction d'un événement déclenché par un tiers.

8. Méthode selon l'une des revendications 1 à 7, ledit compte finance étant automatiquement rechargé respectivement débité lorsque le titulaire du module d'identification se trouve dans une région prédéterminée.

9. Méthode selon l'une des revendications 1 à 8, ledit compte finance étant automatiquement rechargé respectivement débité à des instants prédéfinis.

10. Méthode selon l'une des revendications 1 à 9, ledit compte finance étant rechargé respectivement débité à partir d'un respectivement sur un autre compte monétaire lié audit module d'identification.

11. Méthode selon l'une des revendications 1 à 10, ledit compte finance étant rechargé respectivement débité à partir d'un respectivement sur un autre compte finance.

12. Méthode selon l'une des revendications 1 à 11, ledit compte finance étant rechargé respectivement débité à partir d'un respectivement sur un compte monétaire d'un autre titulaire.

13. Méthode selon l'une des revendications 1 à 12, ledit compte finance étant rechargé respectivement débité à partir d'un respectivement sur un compte finance défini par ledit titulaire du compte finance.

14. Méthode selon l'une des revendications 1 à 13, dans laquelle le titulaire du compte monétaire utilisé pour recharger respectivement débiter ledit compte finance envoie son accord.

15. Méthode selon l'une des revendications 1 à 14, une limite de rechargement et/ou de débit périodique automatique étant fixée.

16. Méthode selon l'une des revendications 1 à 15, ledit module étant lié à différents comptes finance qui sont rechargés respectivement débités en fonction de différents critères.

17. Méthode selon la revendication 16, lesdits différents comptes finance étant gérés en plusieurs devises.

18. Méthode selon l'une des revendications 1 à 17, les montants étant automatiquement convertis au moment du virement.

19. Méthode selon l'une des revendications 1 à 18, les montants étant automatiquement convertis et transférés entre comptes monétaires qui sont gérés en plusieurs devises lorsque le titulaire du compte finance se trouve dans un autre endroit géographique.

20. Méthode selon l'une des revendications 1 à 19, ledit débit respectivement ledit rechargement de montants étant contrôlé par le module de rechargement (311) dans l'infrastructure (3) dudit réseau de communication mobile.

21. Méthode selon l'une des revendications 1 à 20, ledit débit respectivement ledit rechargement de montants étant contrôlé par le module de rechargement (311) dans l'appareil mobile (1) dudit titulaire du compte finance.

22. Méthode selon l'une des revendications 1 à 21, le montant qui est rechargé respectivement débité étant défini par le titulaire du compte finance.

23. Méthode selon la revendication 1, le calendrier électronique étant géré dans l'appareil mobile du titulaire du compte finance ou dans un ordinateur relié à internet du titulaire du compte finance.

24. Méthode selon la revendication 1 ou 23, les événements spécifiés étant des rendez-vous ou dates de vacances.

25. Méthode selon la revendication 1, 23 ou 24, les ordres de rechargement ou de débit étant exécutés en tant qu'événement spécifié dans le calendrier électronique.

26. Module de rechargement proactif (311), qui recharge ou débite automatiquement des montants dans respectivement sur des comptes finance d'utilisateur liés à des modules d'identification en fonction d'événements prédéterminés, les modules d'identification (10) identifiant des appareils mobiles (1) dans un réseau de communication mobile,
**caractérisé en ce que**
les événements prédéterminés sont des événements spécifiés dans un calendrier électronique géré par le titulaire du compte finance.
